Europäisches Patentamt

(19) European Patent Office

Office européen des brevets

(11) Publication number : **0 227 830 B1**

(12) # EUROPEAN PATENT SPECIFICATION

(45) Date of publication of patent specification :
04.09.91 Bulletin 91/36

(51) Int. Cl.⁵ : **H01M 10/34**

(21) Application number : 86905489.0

(22) Date of filing : 18.07.86

(86) International application number :
PCT/US86/01492

(87) International publication number :
WO 87/01242 26.02.87 Gazette 87/05

(54) LONG LIFE ELECTROLYTE FOR NICKEL-HYDROGEN CELLS.

The file contains technical information submitted after the application was filed and not included in this specification

(30) Priority : 16.08.85 US 766737

(43) Date of publication of application :
08.07.87 Bulletin 87/28

(45) Publication of the grant of the patent :
04.09.91 Bulletin 91/36

(84) Designated Contracting States :
DE FR GB

(56) References cited :
EP-A- 0 140 693
EP-A-01 076 12
GB-A- 2 162 994
US-A- 3 999 910

(56) References cited :
Proceedings of the 20th Intersociety Energy Conversion Engineering Conference, vol. 1, August 1985, (Society of Automotive Engineers, Inc., Warrendale, PA, US), H.S. Lim e al.: "Koh concentration effect on the cycle lifɛ of nickel-hydrogen cells", pages 1165-1170
Proceedings of the 20th Intersociety Energy Conversion Conference, vol. 1, August 1985, (Society of Automotive Engineers, Inc., Warrendale, PA, US), J.F. Stockel: "Self-dischargɛ performance and effects of electrolyte concentration on capacity of nickel-hydrogen (ni/H2) cells", pages 1171-1196
Proceedings of the 20th Intersociety Energy Conversion Engineering Conference SAE p.164, H.S.Lima et al, p.1165-1170 (vol. 1),Wai rendale 1985

(73) Proprietor : Hughes Aircraft Company
7200 Hughes Terrace P.O. Box 45066
Los Angeles, California 90045-0066 (US)

(72) Inventor : LIM, Hong, S.
30446 W. Rainbow Crest
Agoura, CA 91301 (US)
Inventor : VERZWYVELT, Scott, A.
3086 Lodgewood
Newbury Park, CA 91320 (US)

(74) Representative : Kuhnen, Wacker & Partner
Schneggstrasse 3-5 Postfach 1553
W-8050 Freising (DE)

EP 0 227 830 B1

## Description

## BACKGROUND OF THE INVENTION

### 1. Field of the Invention

This invention relates to nickel-hydrogen battery cells. More particularly, this invention relates to a nickel hydrogen battery having an increased cycle life over the state of the art battery cells.

### 2. Description of Related Art

Nickel-hydrogen batteries typically comprise a nickel-oxide/hydroxide electrode, designated as the cathode, a hydrogen gas electrode containing a platinum catalyst, designated as the anode. The electrodes are generally in the form of plates separated by a porous sheet of non-conduct material designated as a separator which extends between the two electrodes and an aqueous solution of potassium hydroxide electrolyte. The separator is sufficiently thick to prevent short circuit contact between the electrodes and it should hold a sufficient quantity of electrolyte for desired cell performance.

Nickel-hydrogen cells of this type are particularly useful in spacecraft applications, which necessitate the cells having a long cycle life and minimal weight. The weight and cycle life of the cell are closely related to each other. Nickel-hydrogen cells generally have a limited life of about 5000 to 9000 cycles in a typical low earth orbit (LEO) cycling at 90 min/cycle and at 80% depth-of-discharge. Under these conditions, a cell will utilize approximately 80% of its total energy. When the depth of discharge (DOD) of the cell operation is decreased, the effective cell weight is increased in an inversely proportional manner, however, the cycle life also increases.

The nickel electrode expands, with normal cycling, creating voids or spaces which are substantially filled with electrolyte. These voids are in effect removing electrolyte from the separator through capillary action, i.e., "separator dry-out", which ultimately results in poor cell performance. Separator dry out, resulting from an insufficient amount of electrolyte being contained within the separator, can lower the cell voltage and can further reduce the capacity of the cell. Thus, the electrode is susceptible to electrode expansion which is caused by "active material expansion". Electrode expansion also results in a pore distribution change and an increase in the surface area of the electrode. The expansion of the electrode also increases the mechanical stress on the cell stack.

Another problem associated with nickel-hydrogen cells is oxygen recombination. During the normal charging and over charging, necessary parts of normal cycling oxygen gas is produced in the cell by electrolysis of water in the electrolyte. This oxygen must be recombined with the hydrogen gas to form water without substantial accumulation in the cell to prevent the build-up of oxygen gas pressure. A build-up of oxygen gas pressure may cause a destructive violent recombination within the cell.

A gradual pressure increase of hydrogen pressure is usually observed with the charge-discharge cycling of nickel-hydrogen cells. This pressure increase is believed to be caused by slow corrosion of the nickel sinter. A pressure increase within the cell to a value of more than twice the original value has been observed after ten thousand cycles or greater. (See M. J. Mackowski, et al, "Cycling Characteristics and Failure Modes of Prototype Nickel-Hydrogen Cells", p. 146, 19th Intersociety Energy Conversion Engineering Conference, Aug. 1984). For a long life application (e.g., 5 yr. LEO mission requires 30,000 cycles), it is desirable to reduce the pressure increase rate, in order to prevent a potential pressure vessel problem.

Generally, the typical concentration of potassium hydroxide (KOH) in the electrolyte utilized for a nickel-hydrogen battery cell is approximately 31% by weight KOH (See G. Van Ommering, "Real-Time Life Test Performance of a Nickel-Hydrogen Battery" p. 209, 16th Intersociety Energy Conversion Engineering Conference, August 1981. E. Levy, "Life Test Data and Flight Predictions for Nickel-Hydrogen Batteries", p. 774, 17th Intersociety Energy Conversion Engineering Conference, August 1982. It is generally known as per P. F. Ritterman, "Factors Affecting Nickel-Hydrogen Cells," Proc. 1983 GSFC Cells," Proc. 1983 GSFC Battery Workshop, November 1983, NASA Conf. Pub. 2331, 1984, p. 464-468, that increased electrolyte concentration will increase the cell capacity.

Although 27% KOH electrolyte was used in U.S. Patent 4,117,206, it was utilized merely as an electrolyte solution to test another cell with optimum electrolyte distribution among the cell components. In the claim of this patent, 30% to 31% KOH electrolyte was in fact claimed, which clearly indicates that no merit was recognized in a KOH concentration below this 30% to 31% range.

It is clear that a nickel-hydrogen cell undergoes many physical and chemical changes due to charge-discharge cycling. These changes, quite expectedly, cause cycle life problems. Simpler methods of increasing the cycle life of the nickel-hydrogen cell that are not only cost effective and that do not increase the weight of

EP 0 227 830 B1

the cell are obviously needed.

## SUMMARY OF THE INVENTION

The present invention relates to a nickel-hydrogen battery cell having an aqueous electrolyte concentration of about 26% of potassium hydroxide (KOH) by weight of the electrolyte. The nickel-hydrogen battery cell utilized in the instant invention may comprise an individual pressure vessel (IPV) cell consisting of a plurality of alternatively spaced nickel and hydrogen electrodes with separators therebetween or a bipolar structure (a battery having a plurality of individual cells connected in series).

The invention further relates to the use a nickel-hydrogen battery cell according to Claim 5 in spacecraft applications.

Through the use of the present invention, a nickel-hydrogen battery cell is provided which has a substantially longer cycle life and which slows down the corrosion of the nickel sinter thereby reducing the pressure increase rate within the cell.

It is thus an object of the present invention to provide a nickel-hydrogen battery cell with substantially increased cycle life.

It is another object of the present invention to provide a means for increasing the cycle life of a nickel-hydrogen battery cell capable of being used with a variety of stack configurations (bipolar, individual pressure vessel, etc.).

## BRIEF DESCRIPTION OF DRAWINGS

FIG. 1 depicts a plot of the end-of-discharge voltage (EDDV) versus cycle number for nickel-hydrogen test cells having various KOH electrolyte concentrations.

FIG. 2 depicts a plot of the interim capacities (ampere-hours) of the nickel-hydrogen test cells versus the number of cycles (80 min. charge followed by 1.37C discharge to 1.0V).

FIG. 3 depicts plots of the capacity (ampere-hours) of three test cells versus the KOH electrolyte concentration. All capacities were measured after charging at C rate for 80 min, and discharging at 0.5C rate (Curve A), 1.37C rate (Curve B), and 4.0C rate (Curve C).

## DETAILED DESCRIPTION OF THE INVENTION

The present invention relates to nickel-hydrogen battery cell having a potassium hydroxide (KOH) electrolyte concentration of 26% (percentage of electrolyte weight). The nickel-hydrogen battery cell utilized in the instant invention may comprise an individual pressure cell consisting of a pair or a plurality of alternately spaced nickel and hydrogen electrodes, with separators therebetween (where the electrodes are connected in parallel) or of a bipolar structure (a battery having a plurality of individual cells connected in series), or said cell.

Typically, electrode stacks can be arranged in a "recirculation" type configuration or in a back-to-back configuration. This is illustrated in U.S. Patent No. 4,127,703 issued to Holleck and U.S. Patent No. 4,115,673, issued to Van Ommering et al. The recirculation stack design of a nickel-hydrogen cell has been described by G. Holleck, "Failure Mechanism in Nickel-Hydrogen Cells", the 1976 Goddard Space Flight Center Battery Workshop Proceedings, NASA Publication X-711-77-28, p. 297. In this design, the components are stacked in repeating units of the following sequence:

Gas screen/hydrogen electrode/separator/nickel electrode/optional electrolyte reservoir/optional porous membrane/

A wall wick for electrolyte is needed for this stack. The back-to-back stack design, also described by G. Holleck, has the virtually the same repeating unit within the stack (as shown above) with a slight variation as follows:

Gas screen/hydrogen electrode/separator/nickel electrode/optional electrolyte reservoir/optional porous membrane/optional electrolyte reservoir/nickel electrode/separator/hydrogen electrode/

The relative merits of these designs were described in the afore-mentioned reference. The instant invention applies for both designs equally. H. S. Lim et al, disclose a bipolar configuration of a nickel hydrogen battery cell as depicted in US-A-4 567 119 (EP-A-187 145). It should be noted that the instant invention which provides a KOH electrolyte concentration of 21% to 28% can be utilized in all of the nickel-hydrogen battery cells depicted above, as well as in practically any other cell type configuration presently known. As the nickel electrode is cycled, the pore volume within the electrode, especially in the range of 0.01 to 0.1 microns ($\mu$m) increase rather drastically. These smaller pores have higher electrolyte retention capabilities, which draw via capillary action, electrolyte from the pores of the separator thereby causing "separator dry-out".

3

The dry stack condition or "separator dry-out", occurs when the individual nickel electrodes expand through repeated cycling as explained above. This expansion creates pores within the electrode which actually remove electrolyte from the separators. These small expansion-created pores absorb the potassium hydroxide electrolyte, via capillary action from the separator, since the separator has a much larger pore size than that of the electrodes. As a result of this shift of electrolyte, the separators in the conventional battery become dry, thereby causing functional degradation of the cell. Separator dry-out and the mechanical pressure (exerted on the cell stack) both contribute to decreasing the cycle life of the cell by rupturing the cell stack. This rupturing can disrupt the cell function e.g. by creating electrical discontinuity.

The expansion of the nickel electrode may also create mechanical pressure on the cell stack, as stated above. Testing has indicated that a nickel electrode, expands to about 30% of its original thickness after several thousand charge-discharge cycles at a 60% to 80% depth-of-discharge operation. For example, see P.P. McDermott, "Analysis of Nickel Electrode Behavior in An Accelerated Test", Proceedings of the Symposium on Nickel Electrode, The Electrochemical Society, Inc., Vol. 82-4, pp. 224-237. A reduction in the expansion rate of the nickel electrode thickness in 20% KOH, as compared to that in a 30% KOH electrolyte was reported by M. P. Bernhardt and D. W. Mauer, Proc. 29th Power Sources Conf. 1980, Electrochemical Society, p. 219. This result could be construed to indicate that a beneficial effect might be obtained by reduced KOH concentration. However, there was no definite indication of any real type of cycle life benefit.

During the normal charging cycle and during overcharging, oxygen gas is produced in the cell by the electrolysis of water in the electrolyte, pursuant to the following equation:

$$2OH^- \longrightarrow 1/2\, O_2 + H_2O + 2e^-$$

This oxygen must be recombined with the pressure vessel hydrogen gas to form water within the cell to prevent the buildup of oxygen gas pressure. We believe that the reduced KOH concentration might have facilitated this oxygen recombination rate by increasing the solubility of oxygen, thereby facilitating the transport rate of oxygen from the gaseous phase to the electrode surface where the oxygen is reacted. With respect to the pressure build-up of hydrogen gas in the battery, however, two potential sources account for the hydrogen pressure increase. One is the potential increase of the state of charge of the active material with cycling. This increase is a result of the increase in the average oxidation state of the nickel oxide. The oxidation state of nickel oxide is increased proportionately by the amount of hydrogen gas evolved. The other potential source for the pressure increase, and more likely the major source, is the gradual corrosion of the nickel sinter by the following overall reactions as follows:

$$Ni + 2H_2O \longrightarrow Ni\,(OH)_2 + H_2 \quad (1)$$

and

$$Ni(OH)_2 \longrightarrow NiOOH + 1/2\, H_2 \quad (2)$$

or a combined reaction of (1) and (2), as follows:

$$Ni + 2H_2O \longrightarrow NiOOH + 3/2\, H_2 \quad (3)$$

An obvious consequence of this pressure build-up is a potential need for upgrading the pressure vessel for safe containment of the hydrogen at is increased pressure level, depending on the cell design and the cycle life requirements. In addition, there are other potential consequences which are expected from the corrosion reactions of the nickel electrode. These consequences include the weakening of the sinter structure, consumption of water from the electrolyte (which drys out the cell), and an increase in the KOH concentration. The weakening of the sinter structure may also cause an inefficient current collection from the active material in the electrode because of a disruption in the current path through the sinter. However, through the use of the present invention, the problems associated with the pressure build-up and the corrosion of the nickel sinter, may be alleviated by a decrease in said corrosion rate by a factor of three or more by using a KOH concentration of 26% or lower.

All of the above-discussed problems are potential life limiting mechanisms associated with the cycling of a nickel-hydrogen battery cell and which are alleviated or minimized through the use of the present invention.

The following examples will aid in more specifically and distinctly pointing out the patentable features of the instant invention.

## EXAMPLE 1

Cycle life tests were carried out at 23°C using a nickel-hydrogen boiler plate cell containing sintered type nickel electrodes and electrolyte of various KOH concentrations, namely, 21%, 26%, 31% and 36%. The cycle regime of the life test was continuous cycling by 17.5 min. discharge at 2.74 C* rate and 27.5 min. recharge at 1.92 C rate, making the charge to discharge ratio of 1.10 and 80% depth of discharge (DOD**) of the rated capacity. This is an accelerated lower earth orbit (LEO) regime.

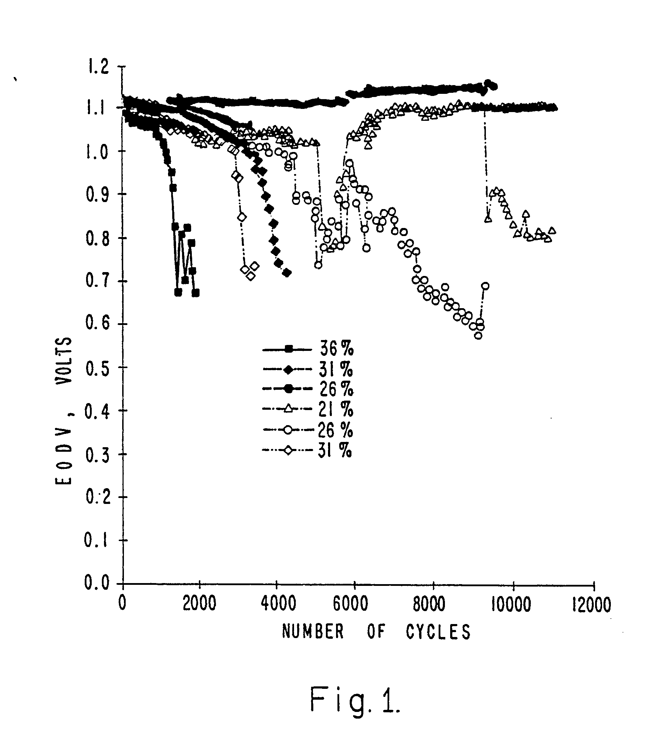

The voltage performance (end-of-discharge voltage) of this life test are summarized in FIG. 1. By looking at the graph, it is clear that the test cells having 36% KOH and 31% KOH concentrations have already failed after 1300 and 3300 cycles respectively. The cells with lower KOH electrolyte concentrations cycled much longer. One of the two 26% KOH cells, did not exhibit any indication of failure after 11,000 cycles. These test cells were operated at 80% DOD up to approximately 5800 cycles, at 74% DOD up to approximately 9500 cycles; and at 80% DOD through the remaining cycles. The cycle life, surprisingly, more than doubled when the KOH concentration was decreased by 5%, e.g. from 36% to 31% and from 31% to 26%, respectively. Our test results indicate a substantial increase in the cycle life of nickel-hydrogen cells when the electrolyte concentration (percentage of cell weight) was decreased from the industry standard of 31%. This discovery is quite unexpected since previously, it was thought that an increased electrolyte concentration would increase the cell capacity.

## EXAMPLE II

Example II illustrates a comparison of the cell capacity, measured in ampere-hours (18 hr.) versus the cycle life of various nickel-hydrogen cells. The nickel-hydrogen cells utilized in this example are the same as those utilized in Example I.

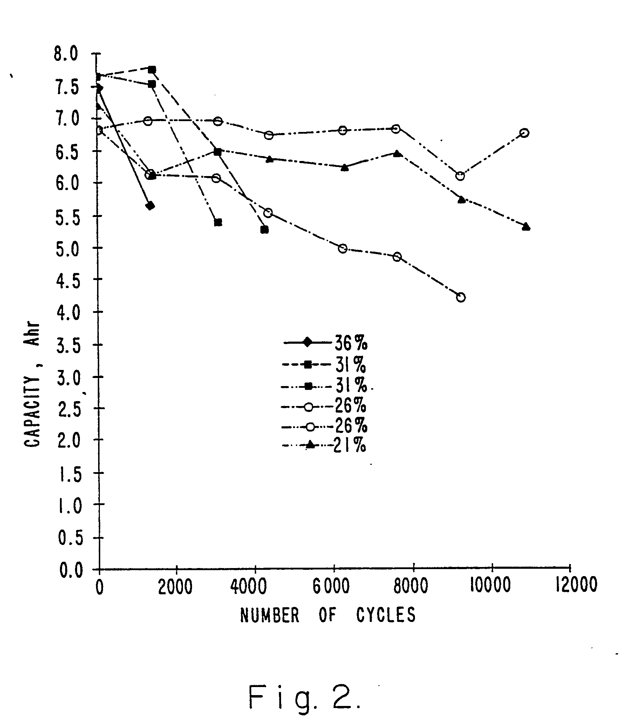

The graph depicted in FIG. 2 indicates that the initial capacity of the nickel-hydrogen cell decreased as the KOH electrolyte concentration decreased. However, the capacity change (decrease) with cycling was also reduced as the KOH concentration was decreased. The cell with 36% KOH electrolyte showed an abrupt decrease in capacity after 1300 cycles. Those cells containing 31% KOH electrolyte exhibited a similar abrupt reduction in capacity at approximately 2000-4000 cycles. Surprisingly, the capacities of the cells having lower KOH concentrations, all exhibited a more gradual capacity decrease. The benefit of the increase in cycle life of the nickel-hydrogen cell outweighs the initial capacity loss experienced. This is true particularly, at the relatively low discharge rates utilized in GEO (roughly 0.5C rate) and in LEO (roughly 1.37C rate) spacecraft applications. This is especially true since the life of a satellite is limited by the life of its battery.

## EXAMPLE III

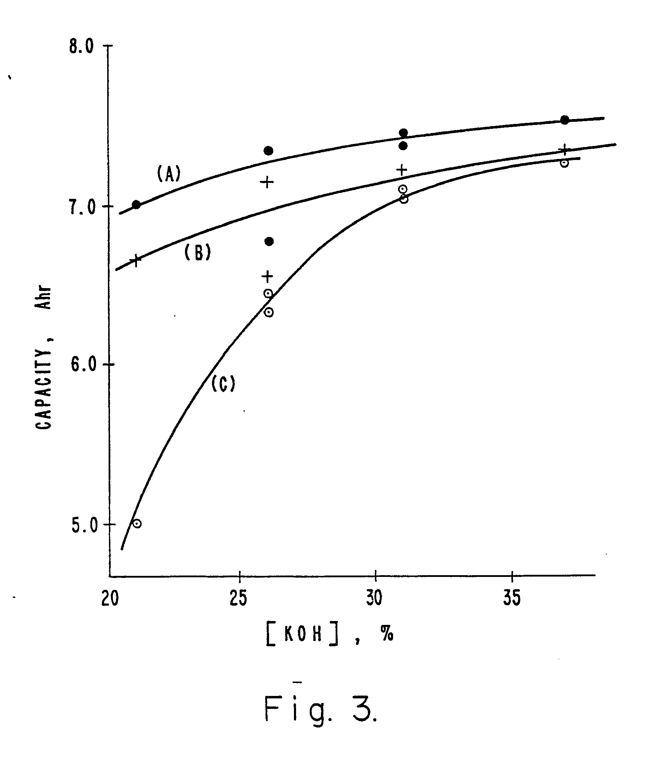

FIG. 3 is a plot of the effect of KOH concentration (percentage of cell weight) on the initial capacity (amphere hours) of nickel-hydrogen cells. Plot A depicts a nickel-hydrogen cell that was discharged at 0.5 C rate (typical GEO rate) to 1.0 V. Plot B depicts a nickel-hydrogen cell that was discharged at 1.37C rate (typical LEO rate) to 1.0V and plot C depicts a nickel-hydrogen cell that was discharged at 4.0C rate to 1.0V (a much higher rate than that used in most spacecraft applications). All of the above cells were charged at C rate for 80 min. The nickel-hydrogen cells utilized in this example were the same as those utilized in Example I.

In looking at FIG. 3, it is evident that the initial capacity of the nickel-hydrogen cell has decreased with decreased KOH electrolyte concentration (as discussed previously in Example II). However, it appears that the initial capacity of the cell decreases asymptotically with decreased KOH electrolyte concentration. Furthermore, it is evident that this intial drop in the capacity of the cell (due to a lower KOH concentration) can be minimized by lowering the discharge rate. Curves A and B, which weye discharged at 0.5C and 1.37C respectively, exhibit higher initial cell capacities at the lower KOH electrolyte concentration levels than curve C, which was discharged at a much higher "C" rate (4.0C). Therefore, though a nickel-hydrogen with a lowered KOH electrolyte concentration, as taught by the present invention does experience, at least initially, lowered cell capacity, said limitation is substantially outweighed by the other advantages associated with the instant invention, e.g., increased cycle life, decreased cell pressure and a decrease in the corrosion rate of the nickel sinter.

## EXAMPLE IV

A cycle life test was conducted on a group-of several boiler plate (bp) nickel-hydrogen cells which were cycled in a 45-min. accelerated low earth orbit (LEO) cycle regime at 23°C. These cells contained three sintered type nickel electrodes of various designs. The design parameters included the pore size of the plaque substrate,

* C = full discharge of battery cell in 1 hour.
** depth discharge (DOD) is the amount of energy removed from the cell during discharge.

the mechanical strength of the sinter, and the active material loading level. The results are depicted on Table 1 on page 15.

In looking at Table 1, one can note an extremely consistent rate of hydrogen pressure increase at room temperature from cell Nos. 1 through 17 at 31% KOH electrolyte concentration and at room temperature, when the rates were taken from the period of pressure increase at a constant rate. We believe that the pressure is due to pure hydrogen production as summarized in the last column of Table 1. The average rate of 12 cells at 23°C in the 45 min. cycling was approximately $1.6 \times 10^{-4}$ Ah/electrode/cycle (ampere hour/electrode/cycle). The average of the 5 cells at 40°C in a similar cycle regime was approximately $2.8 \times 10^{-4}$ Ah/electrode/cycle. These values are surprisingly consistent from one cell to another. The pressure increase rate at 40°C however, was 1.75 times faster than the rate at 23°C.

It is interesting to note that when the KOH concentration in the electrolyte was decreased (test cells 18 and 19), there was a significant decrease in the rate of pressure increase. The rate with 26% and 21% KOH electrolyte, respectively, was $5.2 \times 10^{-5}$ Ah/electrode/cycle and $2.6 \times 10^{-5}$ Ah/electrode/cycle. This would appear to indicate that reduced KOH electrolyte concentration would reduce the rate of pressure build-up within the cell. As discussed in the specification on page 9-10, this decrease in the rate of pressure build-up can reduce the corrosion rate of the nickel sinter and thereby further increase the cycle life of the nickel-hydrogen cell. Moreover, our observations that the rate of pressure build-up is increased as the temperature is increased support this premise.

## TABLE 1

### RATES OF PRESSURE INCREASE OF NiH₂ CELL WITH CYCLING AT 80% DEPTH-OF-DISCHARGE IN A 45 min. ACCELERATED CYCLE REGIME.

| Cell No. | % KOH conc. | T°C | Hydrogen Pressure Increase Rate (Ah/cycle/el) |
|---|---|---|---|
| 1 | 31% | 23 | $1.8 \times 10^{-4}$ |
| 2 | 31% | 23 | $1.6 \times 10^{-4}$ |
| 3 | 31% | 23 | $1.3 \times 10^{-4}$ |
| 4 | 31% | 23 | $1.3 \times 10^{-4}$ |
| 5 | 31% | 23 | $1.7 \times 10^{-4}$ |
| 6 | 31% | 23 | $1.2 \times 10^{-4}$ |
| 7 | 31% | 23 | $2.0 \times 10^{-4}$ |
| 8 | 31% | 23 | $2.0 \times 10^{-4}$ |
| 9 | 31% | 23 | $2.0 \times 10^{-4}$ |
| 10 | 31% | 23 | $1.9 \times 10^{-4}$ |
| 11 | 31% | 23 | $1.5 \times 10^{-4}$ |
| 12 | 31% | 23 | $1.2 \times 10^{-4}$ |
| 13 | 31% | 40 | $2.5 \times 10^{-4}$ |
| 14 | 31% | 40 | $2.7 \times 10^{-4}$ |
| 15 | 31% | 40 | $3.1 \times 10^{-4}$ |
| 16 | 31% | 40 | $2.6 \times 10^{-4}$ |
| 17 | 31% | 40 | $3.0 \times 10^{-4}$ |
| 18 | 21% | 23 | $2.6 \times 10^{-4}$ |
| 19 | 26% | 23 | $5.2 \times 10^{-4}$ |

## EXAMPLE V

This example utilizes a typical individual pressure vessel (IPV) nickel-hydrogen cell having a nickel electrode which consists of a 6.6 g nickel sinter including the grid substrate and 4.6 g of active material (theoretical capacity of 1.33 Ah). Said cell is loaded with 4.7 g (3.6 ml.) of 31% KOH electrolyte for each nickel electrode within the cell, and let's assume that corrosion occurs by the overall reaction depicted by Equation (3) as depicted on page 9 of the specification and as shown hereafter.

$$Ni + 2H_2O \longrightarrow NiOOH + 3/2\,H_2 \quad (3)$$

This reaction occurs at a constant rate of approximately $1.6 \times 10^{-4}$ Ah/cycle/electrode as per our data in Table 1 at 23°C and at 31% KOH electrolyte concentration. Given these assumptions, the expected changes after 10,000 cycles are summarized in Table 2 below:

## TABLE 2

EXPECTED CHANGES IN A TYPICAL $Ni/H_2$ CELL BY PLAQUE CORROSION AFTER 10,000 CYCLES AT 23°C.

|  | Before Cycling (per electrode) | After 10,000 Cycles (per electrode) |
| --- | --- | --- |
| Total Ni sinter | 6.6 g | 5.43 |
| Total Ni(OH)$_2$ | 4.6 g | 6.5 |
| Total theo. capacity | 1.33 Ah | 1.86 |
| Total H$_2$O | 3.243 g | 2.523 |
| KOH concentration | 31% | 36.6 |
| Total electrolyte | 4.7 g <br> 3.6 ml | 3.98 <br> 2.92 |

The magnitude of these changes are not affected by the DOD of the cell operation. About 18% of nickel plaque is calculated to be corroded, producing 1.9 g of Ni(OH)$_2$ and consuming 0.72 g of water from the electrolyte for each nickel electrode in the cell. This water consumption would increase the KOH concentration to 36.6% from the intial value of 31% and reduce the electrolyte loading to 2.9 ml/electrode from the inital value of 3.6. These changes would weaken the sinter structure and cause a dry condition which could affect the cell performance substantially. This example further demonstrates these cycle life problems will be less severe at lower KOH concentrations. A reduced pressure increase rate will additionally make it more feasible to use a lighter pressure vessel e.g., in order to contain the hydrogen pressure, thereby reducing the battery weight.

## EXAMPLE VI

Based on the data collected in Examples I-II and from other studies we were able to make on estimation on the potential cycle life of a nickel-hydrogen cell, having an energy density of about 40 W hr/kg for a 1 kwh/30,000 cycle system (5yr. LEO requiring about 30,000 cycles). Based on our estimations, as illustrated in Table 3, a nickel-hydrogen cell utilizing decreased KOH electrolyte concentration, as taught by the instant invention should be able to increase its cycle life (depending on the DOD) by about 300%.

## TABLE 3

### ESTIMATED CYCLE LIFE FOR Ni-HYDROGEN CELL

| Operating Conditions | System Wt. | Potential Cycle Life (90 min. cycle) KOH electrolyte concentration | |
|---|---|---|---|
| | | 31% | 26% |
| 80% DOD | 31.3 kg | ~ 7,000 | >20,000 |
| 70% DOD | 35.7 kg | 10,000 | >30,000 |
| 60% DOD | 41.8 kg | 15,000 | >40,000 |
| 40% DOD | 62.5 kg | 30,000 | >80,000 |

### Claims

1. A nickel-hydrogen battery cell comprising:
a) a pressure vessel;
b) a plurality of alternately spaced nickel and hydrogen electrodes, which define interelectrode spaces therein;
c) an electrolyte reservoir in the form of a separator contained within each interelectrode space; and
d) a potassium hydroxide electrolyte within each reservoir such that said electrolyte is exposed to each electrode,
characterized in the potassium hydroxide electrolyte having a concentration of 26 % (percentage of total electrolyte weight).

2. A nickel-hydrogen battery cell having a bipolar configuration comprising:
a) a pressure vessel containing hydrogen gas; and
b) a plurality of unit cells located within said pressure vessel, said unit cells being stacked adjacent one another for axial current flow wherein each unit cell comprises:
1) walls defining a unit space;
2) a nickel and a hydrogen electrode within said cell space;
3) a separator disposed between said nickel and hydrogen electrodes within said cell spaces having means for allowing oxygen gas evolved at said nickel electrode to reach said hydrogen electrode for recombining; and
(4) a KOH electrolyte located within said cell space and about said nickel and hydrogen electrodes and said separator,
characterized in the KOH electrolyte having a concentration of 26 % (of the electrolyte weight).

3. A method of operating a nickel-hydrogen cell of claim 1 or 2 in a typical low earth orbit.

4. A method according to claim 3, characterized in said cell is discharged at 0.001 to 4C (C = full discharge of battery cell in 1 h).

5. The use of a nickel-hydrogen battery cell having a bipolar configuration comprising:
a) a pressure vessel containing hydrogen gas; and
b) a plurality of unit cells located within said pressure vessel, said unit cells being stacked adjacent one another for axial current flow wherein each unit cell comprises:
(1) walls defining a unit space;
(2) a nickel and a hydrogen electrode within said cell space;

(3) a separator disposed between said nickel and hydrogen electrodes within said cell spaces having means for allowing oxygen gas evolved at said nickel electrode to reach said hydrogen electrode for recombining; and

(4) a KOH electrolyte located within said cell space and about said nickel and hydrogen electrodes and said separator, said KOH electrolyte having a concentration of 26 % (of the electrolyte weight), in spacecraft applications.

## Patentansprüche

1. Eine Nickel-Wasserstoff-Batteriezelle, enthaltend:

a) ein Druckgefäß;

b) eine Mehrzahl von alternierend angeordneten Nickel-und Wasserstoffelektroden, die die Zwischenelektrodenräume darin begrenzen;

c) ein Elektrolytenreservoir in Form eines Separators, der in jedem Zwischenelektrodenraum enthalten ist; und

d) einen Kaliumhydroxid-Elektrolyt innerhalb jedes Reservoirs, so daß jede Elektrode dem genannten Elektrolyt ausgesetzt ist,

dadurch gekennzeichnet, daß der Kaliumhydroxid-Elektrolyt eine Konzentration von 26 % (Prozentsatz des gesamten Elektrolytgewichts) hat.

2. Eine Nickel-Wasserstoff-Batteriezelle mit einer bipolaren Konfiguration, enthaltend:

a) ein Druckgefäß, das Wasserstoffgas enthält; und

b) eine Mehrzahl von Einheitszellen, die innerhalb des genannten Druckgefäßes angeordnet sind, wobei die Einheitszellen in Nachbarschaft zueinander für axialen Stromfluß aufgereiht sind, wobei jede Einheitszelle umfaßt:

1) Wände, die einen Einheitsraum begrenzen;

2) eine Nickel- und eine Wasserstoffelektrode innerhalb des genannten Zellraums;

3) einen Separator, der zwischen den genannten Nikkel- und Wasserstoffelektroden innerhalb der genannten Zellräume angeordnet ist, mit Mitteln, die es ermöglichen, daß an der Nickelelektrode entwickeltes Sauerstoffgas die Wasserstoffelektrode zur Rekombination erreicht; und

4) einen KOH-Elektrolyten, der innerhalb des Zellraumes und um die Nickel- und Wasserstoffelektroden und den Separator angeordnet ist,

dadurch gekennzeichnet, daß der KOH-Elektrolyt eine Konzentration von 26 % (des Elektrolytengewichts) hat.

3. Verfahren zum Betreiben einer Nickel-Wasserstoff-Zelle nach Anspruch 1 oder 2 in einer typischen niedrigen Erdumlaufbahn.

4. Verfahren nach Anspruch 3, dadurch gekennzeichnet, daß die Zelle bei 0,001 bis 4 C (C = volle Entladung der Batteriezelle in 1 h) entladen wird.

5. Die Verwendung einer Nickel-Wasserstoff-Batteriezelle mit einer bipolaren Grundkonfiguration, enthaltend:

a) ein Druckgefäß, das Wasserstoffgas enthält; und

b) eine Mehrzahl von Einheitszellen, die innerhalb des genannten Druckgefäßes angeordnet sind, wobei die Einheitszellen in Nachbarschaft zueinander für axialen Stromfluß aufgereiht sind, wobei jede Einheitszelle umfaßt:

1) Wände, die einen Einheitsraum begrenzen;

2) eine Nickel- und eine Wasserstoffelektrode innerhalb des genannten Zellraums;

3) einen Separator, der zwischen den genannten Nickel- und Wasserstoffelektroden innerhalb der genannten Zellräume angeordnet ist, mit Mitteln, die es ermöglichen, daß an der Nickelelektrode entwickeltes Sauerstoffgas die Wasserstoffelektrode zur Rekombination erreicht; und

4) einen KOH-Elektrolyten, der innerhalb des Zellraumes und um die Nickel- und Wasserstoffelektroden und den Separator angeordnet ist, und eine Konzentration von 26 % (des Elektrolytengewichts) hat, für Raumfahrzeugzwecke.

## Revendications

1. Elément de batterie nickel-hydrogène, comprenant:

a) un récipient pressurisé;

b) plusieurs électrodes au nickel et à l'hydrogène espacées de façon alternée, définissant entre elles des espaces inter-électrodes;

c) un réservoir d'électrolyte sous forme d'un séparateur contenu dans chaque espace inter-électrodes; et

d) un électrolyte à l'hydroxyde de potassium compris dans chaque réservoir de façon que l'électrolyte soit exposé à chaque électrode,

caractérisé en ce que l'électrolyte à l'hydroxyde de potassium a une concentration de 26 % (pourcentage du poids total de l'électrolyte).

2. Elément de batterie nickel-hydrogène en configuration bipolaire, comprenant:

a) un récipient pressurisé contenant de l'hydrogène gazeux; et

b) plusieurs éléments unitaires situés dans le récipient pressurisé, les éléments unitaires étant empilés les uns contre les autres pour permettre un écoulement de courant axial, chaque élément unitaire comprenant:

1) des parois définissant un espace unitaire;

2) une électrode au nickel et une électrode à l'hydrogène comprises dans l'espace d'élément;

3) un séparateur disposé entre les électrodes au nickel et à l'hydrogène comprises dans les espaces d'élément comportant des moyens pour permettre à de l'oxygène gazeux dégagé au niveau de l'électrode au nickel d'atteindre l'électrode à l'hydrogène pour se recombiner; et

4) un électrolyte au KOH situé dans l'espace d'élément et auprès des électrodes au nickel et à l'hydrogène et du séparateur,

caractérisé en ce que l'électrolyte au KOH a une concentration de 26 % (du poids de l'électrolyte).

3. Procédé dans lequel on fait fonctionner un élément nickel-hydrogène conforme à la revendication 1 ou 2 dans une orbite terrestre basse typique.

4. Procédé conforme à la revendication 3, caractérisé en ce que l'élément se décharge à un taux compris entre 0,001 et 4C (C = décharge complète de l'élément de batterie en 1 h).

5. Utilisation d'un élément de batterie nickel-hydrogène en configuration bipolaire, comprenant:

a) un récipient pressurisé contenant de l'hydrogène gazeux; et

b) plusieurs éléments unitaires situés dans le récipient pressurisé, les éléments unitaires étant empilés les uns contre les autres pour permettre un écoulement de courant axial, chaque élément unitaire comprenant:

1) des parois définissant un espace unitaire;

2) une électrode au nickel et une électrode à l'hydrogène comprises dans l'espace d'élément;

3) un séparateur disposé entre les électrodes au nickel et à l'hydrogène comprises dans les espaces d'élément comportant des moyens pour permettre à de l'oxygène gazeux dégagé au niveau de l'électrode au nickel d'atteindre l'électrode à l'hydrogène pour se recombiner; et

4) un électrolyte au KOH situé dans l'espace d'élément et auprès des électrodes au nickel et à l'hydrogène et du séparateur, l'électrolyte au KOH ayant une concentration de 26 % (du poids de l'électrolyte),

dans des applications dans le domaine des engins spatiaux.

Fig. 1.

Fig. 2.

Fig. 3.